# EUROPÄISCHE PATENTSCHRIFT

(11) **EP 2 123 343 B1**
(45) Veröffentlichungstag und Bekanntmachung des Hinweises auf die Patenterteilung: **13.03.2013**
(21) Anmeldenummer: 08022084.1
(22) Anmeldetag: 19.12.2008
(51) Int. Cl.: B01D 53/30, B01D 53/26, B60T 17/00

(54) **Druckluftsystem für ein Fahrzeug**
Compressed air system for a vehicle
Système d'air comprimé pour un véhicule

(30) Priorität: 21.05.2008 DE 102008024629
(43) Veröffentlichungstag der Anmeldung: 25.11.2009
(73) Patentinhaber: WABCO GmbH, 30453 Hannover (DE)
(72) Erfinder: Brinkmann, Stefan, 30451 Hannover (DE); Pendzich, Kevin, 30161 Hannover (DE); Reinhardt, Joachim, 30455 Hannover (DE); Strilka, bernd, 30459 Hannover (DE)

(56) Entgegenhaltungen:
- EP-A- 1 529 704
- WO-A-02/096732
- DE-A1- 3 445 699
- DE-A1- 3 724 149
- FR-A- 2 575 937

## Beschreibung

Die Erfindung betrifft ein Druckluftsystem für ein Fahrzeug, umfassend einen Kompressor, einen regenerierbaren Lufttrockner und eine Steuerung zur Steuerung des Druckluftsystems, wobei das Druckluftsystem derart eingerichtet ist, dass für eine Regeneration des Lufttrockners in einer Regenerationsrichtung entgegen einer durch die Anordnung des Kompressors und des Lufttrockners vorgegebene Förderrichtung Luft aus dem Regenerationsbehälter durch den Lufttrockner leitbar ist. Aus der EP 1 529 704 A1 ist eine solche gattungsbildende Vorrichtung bekannt.

Bei hohem Luftverbrauch innerhalb eines Druckluftsystems eines Kraftfahrzeugs kann es bei ungünstigen Außenbedingungen zu einem schnellen und starken Anstieg der Feuchtigkeit innerhalb des Druckluftsystems kommen. Dies kann zur Folge haben, dass sich die Regeneration und damit auch verbunden die Trocknung der Drucksystemluft durch den Lufttrockner verschlechtert. Dies kann wiederum zur Folge haben, dass es bei abfallender Temperatur, also insbesondere nachts, zum Ausfall von Wasser in dem Druckluftsystem des Fahrzeugs kommt. Dies ist unerwünscht, da Korrosion und das Einfrieren pneumatischer Komponenten die Folge sein können.

Ebenfalls nachteilig auf die Regeneration und damit mittelbar auch auf die Trocknung der Systemluft des Druckluftsystems wirkt sich aus, dass Druckluftsysteme für die Regeneration des Lufttrockners einen nicht verstellbaren Volumenstrom verwenden. Dies hat zur Folge, dass der Lufttrockner suboptimal regeneriert wird, was sich wiederum auf die Dauer der Regeneration oder auf den Luftverbrauch und damit indirekt auf den Energieverbrauch des Systems auswirkt.

Aufgabe der vorliegenden Erfindung ist es deswegen, ein Druckluftsystem für ein Fahrzeug zu schaffen, bei dem die Regeneration des Lufttrockners optimiert ist, sowie ein Verfahren zur Regeneration eines Lufttrockners zu schaffen.

Diese Aufgaben werden gelöst durch ein Druckluftsystem gemäß Anspruch 1 der vorliegenden Erfindung, und ein Verfahren nach Anspruch 5.

Vorteilhafte Weiterbildungen sind Gegenstände der abhängigen Ansprühe.

Der erfindungsgemäße Gegenstand gemäß Anspruch 1, mit dem obige Aufgabe gelöst wird, zeichnet sich dadurch aus, dass das Druckluftsystem zusätzlich ein Variierungsmittel zur Variierung eines in Regenerationsrichtung durch den Lufttrockner strömenden Luftstroms aufweist, und das Druckluftsystem derart eingereichtet ist, dass während einer Regeneration des Lufttrockners der Luftstrom durch das Variierungsmittel variiert wird.

Diesem liegt die Erkenntnis zugrunde, dass je nach dem, an welchem Punkt man sich während der Regeneration des Lufttrockners befindet, der Luftstrom mehr oder weniger effektiv den Lufttrockner regenerieren kann. Der Luftstrom kann insbesondere als Luftvolumenstrom oder Luftmassenstrom berücksichtigt werden.

Das erfindungsgemäße Druckluftsystem ermöglicht die Optimierung der Trockenleistung, insbesondere die effizientere Nutzung der für die Regeneration eingesetzten Luftmenge. Hierdurch kann einerseits eine Reduzierung des Energieverbrauchs bei der Drucklufterzeugung erreicht und andererseits eine höhere Förderleistung in Phasen mit hohen Luftverbräuchen erzielt werden. Des Weiteren ermöglicht das erfindungsgemäße Druckluftsystem ein selbstoptimierendes Regenerationsverhalten entsprechend dem Fahrprofil des Fahrzeugs.

Vorzugsweise umfasst das Variierungsmittel ein Ventil, ein Blendensystem aus zumindest einer ersten Blende und einer zweiten Blende, und/oder eine variable Blende.

Wird ein Ventil als Variierungsmittel verwendet, so kann dieses insbesondere gepulst angesteuert werden, um den Luftstrom zu variieren.

Wird ein Blendensystem aus zwei oder mehreren Blenden verwendet, so ist es vorteilhaft, dass diese in verschiedenen Luftwegen des Druckluftsystems, die zusammen geschaltet und/oder getrennt werden können, angeordnet sind. Die Blenden können unterschiedliche oder auch übereinstimmende Blendenöffnungen aufweisen.

Das erfindungsgemäße Verfahren zur Regeneration eines Lufttrockners eines Druckluftsystems für ein Fahrzeug, in dem der Lufttrockner mit einem Luftstrom durchströmt wird, sieht vor, dass in einem einem ersten Regenerationsabschnitt nachfolgenden zweiten Regenerationsabschnitt der Luftstrom im Vergleich zum Luftstrom des ersten Regenerationsabschnitts reduziert wird.

Es ist möglich, weitere Regenerationsabschnitte innerhalb der Regenerationsphase vorzusehen. Insbesondere kann eine Reduktion des Volumenstroms stetig oder stufenweise erfolgen. Auch eine relative Erhöhung des Volumenstroms in einer späteren Regenerationsphase kann vom erfindungsgemäßen Verfahren umfasst sein.

Die Erfindung wird im Folgenden anhand von mehreren Ausführungsbeispielen, die durch Zeichnungen dargestellt sind, näher erläutert. Dabei zeigt:
- Fig. 1: eine schematische Teildarstellung eines erfindungsgemäßen Druckluftsystems in einer ersten Ausführungsform,
- Fig. 2: eine schematische Teildarstellung eines erfindungsgemäßen Druckluftsystems in einer zweiten Ausführungsform,
- Fig. 3: eine schematische Teildarstellung eines erfindungsgemäßen Druckluftsystems in einer dritten Ausführungsform,
- Fig. 4: ein Diagramm, welches einen Volumenstrom in Abhängigkeit der Zeit in einem ersten Regenerationsvorganges darstellt, und
- Fig. 5: ein Diagramm, welches einen Volumenstrom in Abhängigkeit der Zeit in einem zweiten Regenerationsvorganges darstellt.

Gleiche oder einander entsprechende Elemente sind in den Zeichnungen mit denselben Bezugszeichen gekennzeichnet.

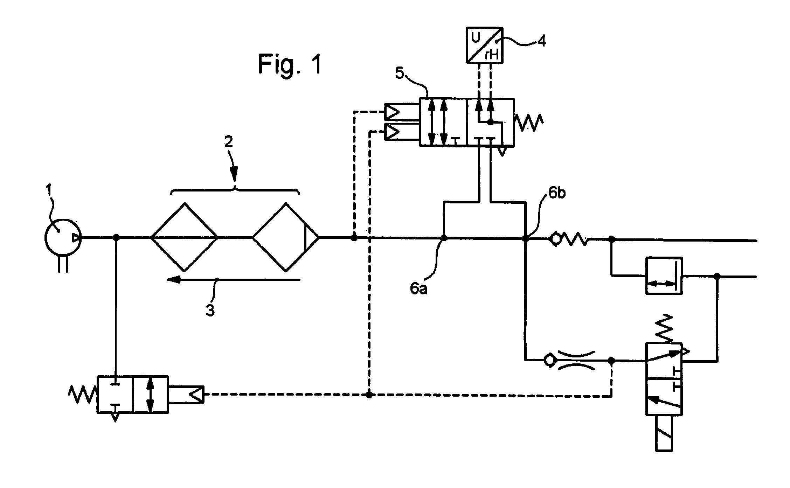

Fig. 1 zeigt eine schematische Teildarstellung einer ersten Ausführungsform eines erfindungsgemäßen Druckluftsystems.

Das erfindungsgemäße Druckluftsystem, welches in diesem Ausführungsbeispiel Teil einer Bremsanlage eines Fahrzeuges ist, umfasst einen Kompressor 1, einen regenerierbaren Lufttrockner 2 und eine Steuerung (nicht dargestellt) zur Steuerung des Druckluftsystems. Das Druckluftsystem ist derart eingerichtet, dass für eine Regeneration des Lufttrockners 2 in eine Regenerationsrichtung, dargestellt durch einen Pfeil 3, entgegen einer durch die Anordnung des Kompressors 1 und des Lufttrockners 2 vorgegebene Förderrichtung Luft aus dem Regenerationsbehälter durch den Lufttrockner 2 leitbar ist.

Des Weiteren weist das Druckluftsystem zusätzlich einen mit der Steuerung verbundenen Feuchte- und Temperatursensor 4 auf, mittels dem die Luftfeuchtigkeit und die Temperatur der Umgebung außerhalb des Druckluftsystems und innerhalb des Druckluftsystems messbar ist. Des Weiteren ist die Steuerung derart eingerichtet, dass das Druckluftsystem basierend auf den durch den Feuchte- und Temperatursensor aufgenommenen Messwerten steuerbar ist, insbesondere Regenerationshäufigkeit, Regenerationsdauer und Regenerationszeitpunkt.

Der Lufttrockner 2 umfasst in diesem Ausführungsbeispiel ein Koaleszensmittel für die Filterung von Öl und ein Trocknungsmittel, hier ein Trocknungsgranulat, für die Aufnahme von sich in der Luft befindendem Wasser.

Der Temperatur- und Feuchtesensor 4 ist mittels eines Umschaltventils 5, welches als 5/2-Wegeventil ausgebildet ist, wahlweise mit der Umgebung außerhalb des Druckluftsystems und der Umgebung innerhalb des Druckluftsystems koppelbar. Dabei ist der Feuchte- und Temperatursensor 4 über das Umschaltventil 5 an zwei Stellen 6a, 6b mit dem Innenbereich des Druckluftsystems koppelbar, wobei die Stellen 6a, 6b in Förderrichtung direkt hinter dem Lufttrockner 2 liegen. Auf diese Weise ist mittels des Feuchte- und Temperatursensors 4 die Luftfeuchtigkeit und die Temperatur des Luftstroms nach dem Durchtritt durch den Lufttrockner 2 messbar, wenn sich das Druckluftsystem in einer Förderphase befindet.

Das Umschaltventil 5 ist pneumatisch umschaltbar. Der hierfür notwendige Druck wird aus dem Druckluftsystem durch entsprechend gestaltete Luftwege, siehe Fig. 1, aufgebracht.

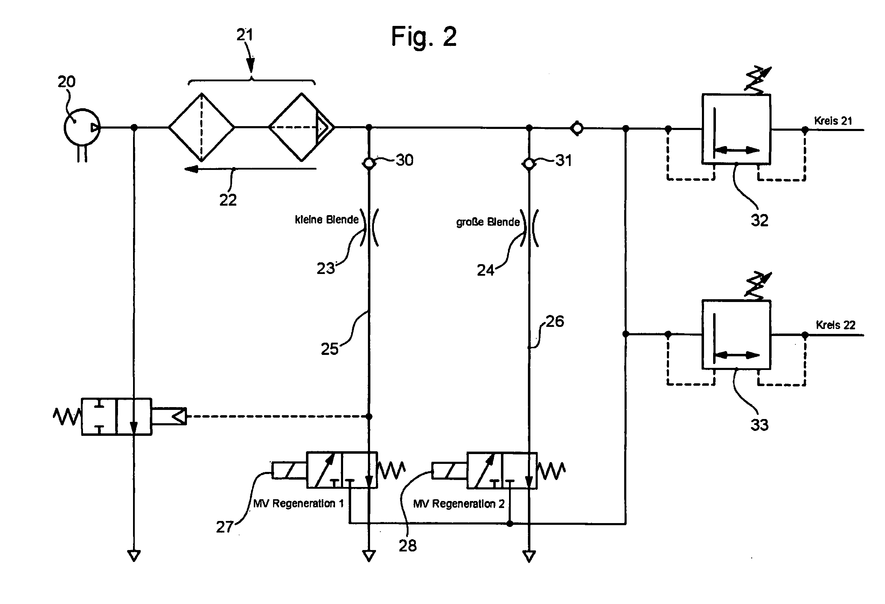

Fig. 2 zeigt eine schematische Teildarstellung eines erfindungsgemäßen Druckluftsystems gemäß einer zweiten Ausführungsform.

Das Druckluftsystem ist Teil einer Bremsanlage eines Fahrzeuges. Es umfasst einen Kompressor 20, einen regenerierbaren Lufttrockner 21 und eine Steuerung zur Steuerung des Druckluftsystems (nicht dargestellt). Das Druckluftsystem ist dabei derart eingerichtet, dass für eine Regeneration des Lufttrockners 21 in einer Regenerationsrichtung, dargestellt durch einen Pfeil 22, entgegen einer durch die Anordnung des Kompressors 20 und des Lufttrockners 21 vorgegebene Förderrichtung Luft aus den Druckluftkreisen Kreis 21, Kreis 22 durch den Lufttrockner 21 leitbar ist. Durch zwei Überströmventile 32, 33 kann ein Mindestdruck in den Druckluftkreisen abgesichert werden.

Des Weiteren umfasst das Druckluftsystem ein Variierungsmittel zur Variierung des Volumens eines in Regenerationsrichtung 22 durch den Lufttrockner strömenden Luftstrom, das mit der Steuerung verbunden ist. Die Steuerung ist derart eingerichtet, dass während einer Regeneration des Lufttrockners 21 der Luftstrom in seinem Volumen durch das Variierungsmittel variiert wird. In diesem Ausführungsbeispiel ist die Steuerung derart eingerichtet, dass während der Regeneration in einem einem ersten Regenerationsabschnitt nachfolgenden zweiten Regenerationsabschnitt der durch den Lufttrockner strömende Luftstrom im Vergleich zum Luftstrom des ersten Regenerationsabschnitts reduziert wird.

Das Variierungsmittel umfasst ein Blendensystem aus einer ersten Blende 23 und einer sich in ihrer Blendenöffnung von der Blendenöffnung der ersten Blende 23 unterscheidenden zweiten Blende 24. In diesem Ausführungsbeispiel besitzt die Blende 24 eine größere Blendenöffnung als die erste Blende 23.

Erste Blende 23 und zweite Blende 24 sind in zwei verschiedenen Luftwegen 25 bzw. 26 angeordnet. Über ein erstes 3/2-Wegeventil, hier ein Magnetventil 27, ist eine Rückströmung von Luft aus den Druckluftkreisen über Blende 23 schaltbar. Über ein zweites 3/2-Wegeventil, hier ein Magnetventil 28, ist zusätzlich die Rückströmung über den Luftweg 26 mit der zweiten Blende 24 schaltbar. Insbesondere ist es möglich, beide Luftwege 25 und 26 gemeinsam zur Rückströmung zu nutzen, so dass erste Blende 23 und zweite Blende 24 gemeinsam für die Regenerationsphase verwendet werden können.

Um den Lufttrockner 21 des Druckluftsystems zu regenerieren ist es beispielsweise möglich, in einem ersten Regenerationsabschnitt die erste Blende 23 und die zweite Blende 24 gemeinsam für die Rückströmung zu nutzen, und in einem zweiten Regenerationsabschnitt die zweite Blende 24 zu entkoppeln. Letzteres bewirkt eine Verringerung des Volumens des Regenerationsluftstromes.

Erstes Magnetventil und zweites Magnetventil 28 sind als Regenerationsventile in dem Druckluftsystem angeordnet. Im nicht betätigten Zustand sind beide Magnetventile 27, 28 mit der Außenluft koppelbar, worüber die Ventile 27, 28 entlüftet werden können.

Zwischen Lufttrockner 21 und erster Blende 23 sowie zweiter Blende 24 ist jeweils ein Rückschlagventil 30 bzw. 31 im Luftweg 25 bzw. 26 angeordnet. Die Rückschlagventile 30, 31 sind derart angeordnet, dass diese bei einem höheren Luftdruck auf der Seite, auf der der Lufttrockner 21 liegt, gegenüber der Seite, auf denen die erste Blende 23 bzw. die zweite Blende 24 liegt, geschlossen sind.

Des Weiteren enthält das Druckluftsystem mehrere Druckluftkreise, exemplarisch durch Kreis 21 und Kreis 22 in der Fig. 2 dargestellt. Diese sind über zwei Überströmventile 32, 33 dem Blendensystem in Förderrichtung nachgeschaltet.

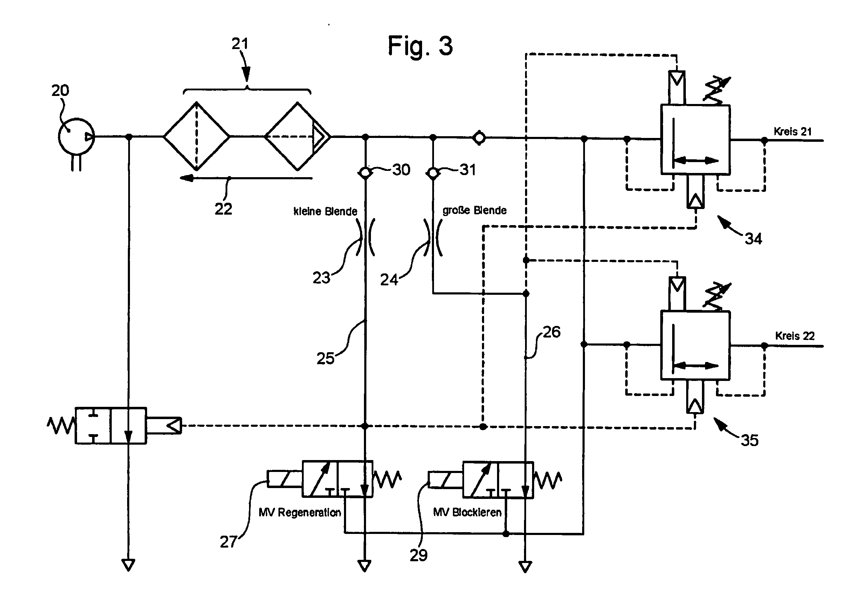

Fig. 3 zeigt eine dritte Ausführungsform eines erfindungsgemäßen Druckluftsystems in einer schematischen Teildarstellung. Das Druckluftsystem gemäß der dritten Ausführungsform ist ähnlich dem Druckluftsystem gemäß der zweiten Ausführungsform aufgebaut. Es wird im Folgenden deswegen nur auf Unterschiede eingegangen.

Im Unterschied zur zweiten Ausführungsform ist das zweite Magnetventil 28 der zweiten Ausführungsform im Rahmen der dritten Ausführungsform als Blockierventil 29, ebenfalls ein 3/2-Wegeventil, welches magnetisch schaltbar ist, ausgebildet. Im Grundzustand, d.h., im nicht magnetisch geschaltetem Zustand, koppelt das Magnetventil 29 den Luftweg 26 mit der Außenluft.

In der Förderphase können somit Kreis 21 und Kreis 22 durch Betätigung des Blockierventils 29, welches derart mit den Überströmungsventilen 34, 25 gekoppelt ist, dass diese hierdurch geschlossen gehalten werden, abgekoppelt werden, was ermöglicht, weitere Druckluftkreise (nicht gezeigt), die nicht abgekoppelt werden, bevorzugt zu befüllen. Des Weiteren sind die Ventile 34, 35 mit dem Luftweg 25 und dem Luftweg 26 derart gekoppelt, dass, wenn das Magnetventil 27 für die Regeneration betätigt ist, die Überströmventile 34, 35 nicht durch das Blockierventil 29 geschlossen werden, oder je nach gewünschter Ausführungsform, offen gehalten werden.

Das Blockierventil 29 übernimmt eine Doppelfunktion: zum einen das Blockieren von bestimmten Druckluftkreisen in der Förderphase, zum anderen die Ankopplung der Blende 24 während der Regeneration. Diese Doppelfunktion ermöglicht die Einsparung eines zusätzlichen Ventils zum Steuern eines zweiten Regenerationspfads. Dies ist vorteilhaft, wenn ein Druckluftsystem gewünscht ist, bei dem bestimmte Kreise bevorzugt befüllt werden sollen.

Gemäß einer vierten Ausführungsform eines erfindungsgemäßen Druckluftsystems weist das Druckluftsystem zusätzlich zu den Komponenten der zweiten Ausführungsform, siehe Fig. 2, einen Feuchte- und Temperatursensor 4 auf, der mittels eines 5/2-Wegeventils einerseits mit dem Innenbereich des Druckluftsystems direkt hinter dem Lufttrockner 21 koppelbar ist, andererseits durch Schalten des 5/2-Wegeventils mit der Außenumgebung koppelbar ist, siehe hierzu auch Fig. 1. Dieses System vereinigt somit sowohl die Steuerung der Regeneration basierend auf durch den Feuchte- und Temperatursensor 4 aufgenommene Messwerte, als auch die Steuerung der Regeneration des Lufttrockners 21 durch Variierung des Volumens eines in Regenerationsrichtung durch den Lufttrockner 21 strömenden Luftstroms mittels Variierungsmittel, hier Blenden 23, 24.

Beide Lösungen können vorteilhaft für den Regenerationsvorgang des Lufttrockners 21 verwendet werden.

Gemäß eines Ausführungsbeispiels wird für die Regeneration des Lufttrockners 21 des Druckluftsystems, bei dem der Lufttrockner 21 mit einem Luftstrom durchströmt wird, in einem einem ersten Regenerationsabschnitt nachfolgenden zweiten Regenerationsabschnitt der Luftstrom in seinem Volumen im Vergleich zum Volumen des Luftstroms des ersten Regenerationsabschnitts reduziert. Dies wird dadurch erreicht, dass während des ersten Regenerationsabschnitts beide Luftwege 25, 26 geöffnet sind, so dass für die Regeneration Luft sowohl durch die erste Blende 23 als auch die zweite Blende 24 strömen kann, im zweiten Regenerationsabschnitt der Luftweg 26 allerdings geschlossen ist, so dass nur durch die erste Blende 23 Luft strömen kann.

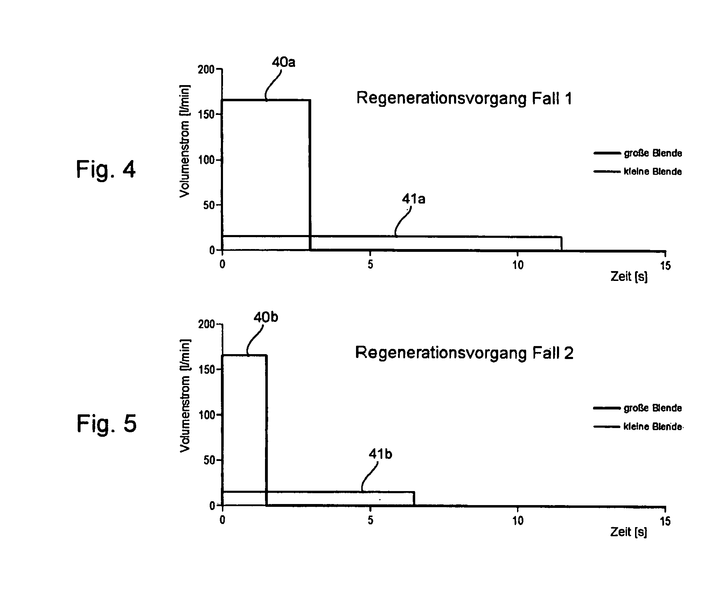

Der Regenerationsvorgang wird in den Fig. 4 und 5 durch jeweils ein Diagramm, welches den Volumenstrom in Abhängigkeit der Zeit während der Regeneration zeigt, darstellt. Die Kurve 40a in Fig. 4 und 40b in Fig. 5 stellt den Volumenstrom dar, der durch die zweite Blende 24 strömt, die Kurve 41 a der Fig. 4 und die Kurve 41 b im Diagramm der Fig. 5 stellt den Volumenstrom dar, der durch die erste Blende 23 strömt. Ein Volumenstrom von 0 bedeutet, dass der jeweilige Luftweg 25 oder 26 geschlossen ist.

Im zweiten Regenerationsvorgang, siehe Diagramm Fig. 5, liegen im Vergleich zu einer ersten Regeneration, siehe Diagramm Fig. 4, gute Bedingungen für die Lufttrocknung vor, beispielsweise eine sehr geringe Umgebungsluftfeuchtigkeit. Im Vergleich zur ersten Regeneration kann somit die Regenerationsdauer der zweiten Regeneration im Vergleich zur Regenerationsdauer der ersten Regeneration mittels Sensor und Steuerung verkürzt werden. Hiermit lässt sich Druckluft und damit Energie einsparen.

Als Alternative lässt sich als Variierungsmittel anstatt eines Blendensystems insbesondere auch ein Ventil einsetzen, dass zur Variierung des Luftstromes zwischen den Zuständen Offen-Geschlossen durch die Steuerung gepulst angesteuert wird. Das Verfahren zur Regeneration des Lufttrockners kann derart durchgeführt werden, dass die Regeneration einmal oder mehrfach durch Schließen des Ventils unterbrochen und nach einem zeitlichen Abstand durch Öffnen des Ventils fortgesetzt wird.

## Patentansprüche

1. Druckluftsystem für ein Fahrzeug, umfassend einen Kompressor (20) und einen regenerierbaren Lufttrockner (21), wobei das Druckluftsystem derart eingerichtet ist, dass für eine Regeneration des Lufttrockners (21) in einer Regenerationsrichtung (22) entgegen einer durch die Anordnung des Kompressors (20) und des Lufttrockners (21) vorgegebenen Förderrichtung Luft durch den Lufttrockner (21) leitbar ist, **dadurch gekennzeichnet, dass** das Druckluftsystem zusätzlich ein Variierungsmittel zur Variierung eines in Regenerationsrichtung (22) durch den Lufttrockner (21) strömenden Luftstroms aufweist, wobei das Druckluftsystem derart eingerichtet ist, dass während einer Regeneration des Lufttrockners (21) der Luftstrom durch das Variierungsmittel variiert wird.

2. Druckluftsystem nach Anspruch 1, **dadurch gekennzeichnet, dass** das Druckluftsystem zusätzlich eine Steuerung zur Steuerung des Druckluftsystems aufweist, die mit dem Variierungsmittel verbunden ist und derart eingerichtet ist, dass während einer Regeneration des Lufttrockners (21) oder von einer Regeneration zur nächsten Regeneration der Luftstrom durch das Variierungsmittel variiert wird.

3. Druckluftsystem nach Anspruch 1 oder 2, **dadurch gekennzeichnet, dass** das Druckluftsystem derart eingerichtet ist, dass während der Regeneration in einem einem ersten Regenerationsabschnitt nachfolgenden zweiten Regenerationsabschnitt der durch den Lufttrockner (21) strömende Luftstrom im Vergleich zum Luftstrom des ersten Regenerationsabschnitts durch das Variierungsmittel reduziert wird.

4. Druckluftsystem nach Anspruch 1 bis 3, **dadurch gekennzeichnet, dass** das Variierungsmittel ein Ventil, ein Blendensystem aus zumindest einer ersten Blende (23) und einer zweiten Blende (24) und/oder eine variable Blende umfasst.

5. Verfahren zur Regeneration eines Lufttrockners (21) eines Druckluftsystems für ein Fahrzeug, in dem der Lufttrockner (21) mit einem Luftstrom durchströmt wird, wobei in einem einem ersten Regenerationsabschnitt nachfolgenden zweiten Regenerationsabschnitt der Luftstrom im Vergleich zum Luftstroms des ersten Regenerationsabschnitts mittels eines Variierungsmittel reduziert wird.

6. Verfahren nach Anspruch 5, wobei eine Regeneration einmal oder mehrfach unterbrochen und nach einem zeitlichen Abstand fortgesetzt wird.

## Claims

1. Compressed air system for a vehicle, comprising a compressor (20) and a regeneratable air dryer (21), the compressed air system being set up in such a way that, for regenerating the air dryer (21), air can be conducted through the air dryer (21) in a regeneration direction (22) opposite to a conveying direction predetermined by the arrangement of the compressor (20) and the air dryer (21), **characterized in that** the compressed air system additionally has a variation means for varying an air stream flowing through the air dryer (21) in the regeneration direction (22), the compressed air system being set up in such a way that, during regeneration of the air dryer (21), the air stream is varied by the variation means.

2. Compressed air system according to Claim 1, **characterized in that** the compressed air system additionally has a control for controlling the compressed air system, which control is connected to the variation means and is set up in such a way that the air stream is varied by the variation means during regeneration of the air dryer (21) or from one regeneration to the next regeneration.

3. Compressed air system according to Claim 1 or 2, **characterized in that** the compressed air system is set up in such a way that, during regeneration in a second regeneration section following a first regeneration section, the air stream flowing through the air dryer (21) is reduced, in comparison with the air stream of the first regeneration section, by the variation means.

4. Compressed air system according to Claims 1 to 3, **characterized in that** the variation means comprises a valve, and a diaphragm system composed of at least one first diaphragm (23) and one second diaphragm (24) and/or a variable diaphragm.

5. Method for regenerating an air dryer (21) of a compressed air system for a vehicle, in which an air stream flows through the air dryer (21) and, in a second regeneration section following a first regeneration section, the air stream is reduced, in comparison with the air stream of the first regeneration section, by a variation means.

6. Method according to Claim 5, regeneration being interrupted once or more than once and being continued after a time interval.

## Revendications

1. Système d'air comprimé pour un véhicule, comprenant un compresseur (20) et un sécheur d'air (21) régénérable, le système d'air comprimé étant conçu de telle sorte que pour régénérer le sécheur d'air (21) dans une direction de régénération (22) opposée à une direction d'extraction prédéfinie par l'agencement du compresseur (20) et du sécheur d'air (21), l'air peut être conduit à travers le sécheur d'air (21), **caractérisé en ce que** le système d'air comprimé comporte en outre un moyen de variation permettant de faire varier un flux d'air s'écoulant à travers le sécheur d'air (21) dans la direction de régénération (22), le système d'air comprimé étant conçu de telle sorte que pendant une régénération du sécheur (21), le flux d'air varie au travers du moyen de variation.

2. Système d'air comprimé selon la revendication 1, **caractérisé en ce que** le système d'air comprimé comporte en outre une commande servant à commander le système d'air comprimé, ladite commande étant reliée au moyen de variation et conçue de telle sorte que pendant une régénération du sécheur d'air (21) ou d'une régénération à la régénération suivante, le flux d'air varie au travers du moyen de variation.

3. Système d'air comprimé selon la revendication 1 ou 2, **caractérisé en ce que** le système d'air comprimé est conçu de telle sorte que pendant la régénération dans une deuxième section de régénération suivant la première section de régénération, le flux d'air s'écoulant à travers le sécheur d'air (21) est davantage réduit par le moyen de variation que le flux d'air de la première section de régénération.

4. Système d'air comprimé selon l'une quelconque des revendications 1 à 3, **caractérisé en ce que** le moyen de variation comprend une soupape, un système à diaphragmes composé d'au moins au moins un premier diaphragme (23) et un deuxième diaphragme (24) et/ou un diaphragme variable.

5. Procédé de régénération d'un sécheur d'air (21) de système d'air comprimé pour un véhicule, dans lequel le sécheur d'air (21) est traversé par un flux d'air, le flux d'air étant réduit dans une deuxième section de régénération suivant la première section de régénération par rapport au flux d'air de la première section de régénération à l'aide d'un moyen de variation.

6. Procédé selon la revendication 5, une régénération étant interrompue à une ou plusieurs reprises et reprenant après écoulement d'un certain temps.
